(19) Europäisches Patentamt
European Patent Office
Office européen des brevets

(11) Publication number: **0 089 635**
**A2**

# (12) EUROPEAN PATENT APPLICATION

(21) Application number: 83102670.3

(22) Date of filing: 18.03.83

(51) Int. Cl.³: C 07 F 9/10
C 07 F 9/58, C 07 F 9/65
A 61 K 31/685

(30) Priority: 22.03.82 GB 8208275
24.05.82 GB 8215124

(43) Date of publication of application:
28.09.83 Bulletin 83/39

(84) Designated Contracting States:
AT BE CH DE FR GB IT LI LU NL SE

(71) Applicant: Fujisawa Pharmaceutical Co., Ltd.
3, Doshomachi 4-chome Higashi-ku
Osaka-shi, Osaka 541(JP)

(72) Inventor: Teraji, Tsutomu
No. 20-6, Kofudai 6-chome Toyono-cho
Toyono-gun Osaka 563-01(JP)

(72) Inventor: Todo, Eishiro
No. 2-2-304, Kitamidorigaoka 1-chome
Toyonaka-shi Osaka 560(JP)

(72) Inventor: Shimazaki, Norihiko
No. 4-10-303, Kamishinden 4-chome
Toyonaka-shi Osaka 565(JP)

(72) Inventor: Oku, Teruo
No. 2-23-406, Wakayamadai 2-chome Shimamoto-cho
Mishima-gun Osaka 618(JP)

(72) Inventor: Namiki, Takayuki
No. 8-22, Wakabaso-1, Sakurai 3-chome
Minoo-shi Osaka 562(JP)

(74) Representative: Türk, Dietmar, Dr. rer. nat. et al,
Redies, Redies, Türk & Gille Patentanwälte
Brucknerstrasse 20
D-4000 Düsseldorf 13(DE)

## (54) Phospholipid derivatives, process for preparation thereof and pharmaceutical composition of the same.

(57) New phospholipid derivatives represented by the formula:

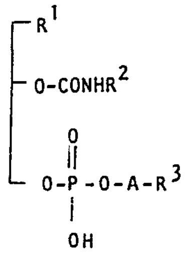

(I)

Wherein $R^1$ is alkoxy;
$R^2$ is hydrogen, lower alkyl or aryl;
A is lower alkylene, and
$R^3$ is N-containing 6-membered heterocyclic group which is linked at N-atom and may be substituted by lower alkyl;

and pharmaceutically acceptable salt thereof, which exhibit antitumor activity.

EP 0 089 635 A2

PHOSPHOLIPID DERIVATIVES, PROCESS FOR PREPARATION THEREOF AND PHARMACEUTICAL COMPOSITION OF THE SAME

This invention relates to phospholipid derivatives. More particularly, it relates to new phospholipid derivatives which have antitumor activity, to process for the preparation thereof, and to pharmaceutical composition comprising the same for therapeutical treatment of cancer in human being and animals.

Accordingly, one object of this invention is to provide new and useful phospholipid derivatives.

Another object of this invention is to provide process for preparation of the phospholipid derivatives.

A further object of this invention is to provide useful pharmaceutical compositions comprising an effective amount of said phospholipid derivatives as an antitumor agent in association with a pharmaceutically acceptable, substantially nontoxic carrier or excipient.

Still further object of the present invention is to provide a therapeutical method of treating cancer.

The object phospholipid derivatives of the present invention are novel and include the compound of the formula (I):

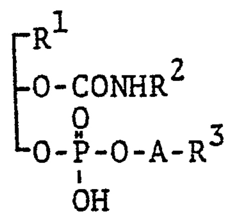

(I)

wherein $R^1$ is alkoxy;

$R^2$ is hydrogen, lower alkyl or aryl;

A is lower alkylene, and

$R^3$ is N-containing 6-membered heterocyclic group which is linked at N-atom and may be substituted by lower alkyl;

and pharmaceutically acceptable salt thereof.

In the above and subsequent description of the present specification, suitable examples and illustrations for the various definitions to be included within the scope of the invention are explained in details as follows.

The term "lower" is intended to mean 1 to 6 carbon atom(s) and the term "higher" is intended to mean 7 to 25 carbon atoms, unless otherwise indicated.

Suitable "alkoxy" for $R^1$ is straight or branced one containing 1 to 25 carbon atoms and may include methoxy, ethoxy, propoxy, isopropoxy, butoxy, tert-butoxy, pentyloxy, hexyloxy, heptyloxy, octyloxy, nonyloxy, decyloxy, undecyloxy, dodecyloxy, tridecyloxy, tetradecyloxy, pentadecyloxy, hexadecyloxy, heptadecyloxy, octadecyloxy, nonadecyloxy, eicosyloxy, heneicosyloxy, docosyloxy, tricosyloxy, tetracosyloxy, pentacosyloxy and the like, among which the preferable alkoxy for

$R^1$ is the higher one and more preferable one is alkoxy having 15 to 20 carbon atoms.

Suitable "lower alkyl" for $R^2$ includes straight and branched ones such as methyl, ethyl, propyl, isopropyl, butyl, pentyl, hexyl or the like.

Suitable "aryl" for $R^2$ include phenyl, tolyl, xylyl, mesityl, cumenyl, naphthyl and the like.

Suitable "lower alkylene" for A is straight or branched one such as ethylene, trimethylene, propylene tetramethylene, pentamethylene, hexamethylene or the like.

Suitable "N-containing 6-membered heterocyclic group which is linked at N-atom" for $R^3$ may be saturated or unsaturated 6-membered heterocyclic groups containing 1 to 2 nitrogen atom(s) such as pyridinio, pyrimidinio, pyridazinio, pyrazinio, piperidino or 1-piperazinyl, among which the most preferable one is pyridinio or 1-piperazinyl.

These N-containing 6-membered heterocyclic groups may be substituted by lower alkyl group(s) as mentioned above.

It is noted that the object compound [I] can be rewritten as intramolecular salts such as [I'] and [I"].

More particularly, compound [I] can be illustrated as [I'] when $R^3$ of the formula [I] is a unsaturated N-containing 6-membered heterocyclic group, and compound [I] can be illustrated as [I"] when $R^3$ of the formula [I] is a saturated N-containing 6-membered heterocyclic group.

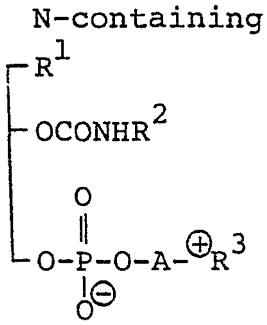

[I']

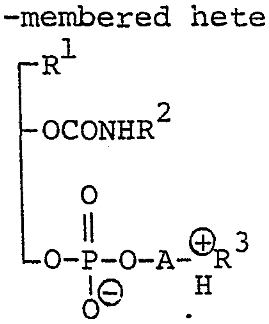

[I"]

(in which $R^1$, $R^2$ and A are each as defined above, $R^3$ of the formula [I'] is a unsaturated 6-membered heterocyclic group and $R^3$ of the formula [I"] is a saturated 6-membered heterocyclic group)

In this specification, a type of formula [I'] is named such as pyridinio phosphate, pyrimidinio phosphate, pyridazinio phosphate or pyrazinio phosphate etc. and a type of formula [I"] is named such as peperidino phosphate or piperazinyl phosphate etc. for convenience' sake.

Further it is noted that the pharmaceutically acceptable salt of the object compound [I] includes an intermolecular salts as illustrated by formula [I'''], [I''''] and [I'''''].

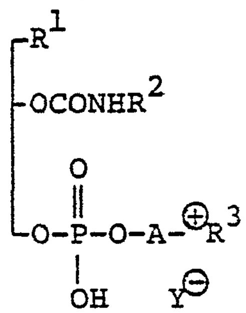
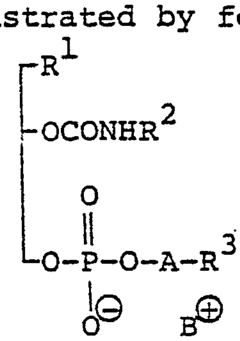
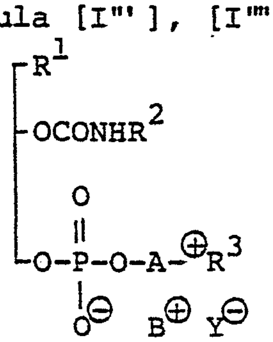

[I''']  [I'''']  [I''''']

(in which $R^1$, $R^2$, A, $R^3$ are as defined above, $Y^{\ominus}$ is an anion residue of an acid and $B^{\oplus}$ is a cation residue of a base).

The salts of type [I'''], [I''''], and [I'''''] may be referred to as an intermolecular onium salt, referred to as an acid addition salt and more specifically referred to as a pyridinium- or a piperazinium-salt and the like, and a salt of the hydrogen phosphate with a base referred to as a metal salt.

Suitable anion residue of an acid for $Y^{\ominus}$ includes an inorganic and organic ones such as a halide anion (e.g. chloride-, bromide-, or iodide-anion etc.), a hydroxide ion, a sulfate anion, a sulfonate anion (e.g. methansulfonyloxy-, benzenesulfonyloxy-, tosyloxy-, etc.), a carboxylate anion (e.g. trifluoroacetoxy- etc.). Suitable cation residue of a base for $B^{\oplus}$ includes an alkali metal ion (e.g. sodium- or potassium-ion, etc.) and the like.

With regard to the object compounds [I], it is to be noted that the compounds [I] include all of the possible optical isomers due to the asymmetric carbon atom in the molecule of the compounds [I].

And further, it is to be noted that all of the chemical formulas of the 1,2-propanediol moiety are shown by formula (A) in this specification instead of formula (B) for abbreviation sake.

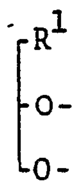

(A)

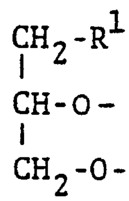

(B)

The process for preparing the object compounds (I) and salts thereof is explained in detail in the following.

The object compound (I) and its salt can be prepared by reacting a compound (II) or its salt with a N-containing 6-membered heterocyclic compound which may be substituted by lower alkyl or its salt as shown in the following scheme.

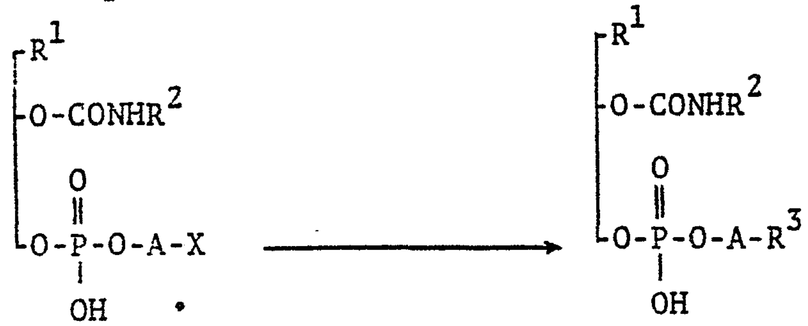

(II) or its salt

(I) or its salt

wherein $R^1$, $R^2$, A and $R^3$ are each as defined above, and X is an acid residue.

Suitable "acid residue" for X may include halogen (e.g. fluorine, chlorine, bromine, iodine), acyloxy (e.g. benzenesulfonyloxy, tosyloxy, etc.), and the like.

The suitable salt of the compound (II) is an alkali metal salt as exemplified before for the compound (I).

The suitable salt of a N-containing 6-membered heterocyclic compound is a salt with an anion residue of an acid as exemplified before for the compound (I).

This reaction is usually carried out in a solvent such as acetone, methanol, tetrahydrofuran, chloroform, benzene or any other solvent which does not adversely affect the reaction. In case that a N-containing 6-membered heterocyclic compound or its salt is liquid, it can also be used as a solvent.

The reaction temperature is not critical and the reaction is preferably carried out under warming or heating.

The object compound [I] is presumaly obtained in an intermolecular salt form (refer the formula [I'''] or [I''''] as mentioned before, in which Y is X) in the present reaction. The said intermolecular salt compound [I'''] and [I''''] (i.e. an acid addition salt) can optionally be transformed to the corresponding intramolecular salt (refer the above formula [I'] or [I''] as mentioned before) by a conventional method (e.g. treatment with an anion-exchange resin, silver ion, etc.).

The object compound can be isolated from the reaction mixture and purified by a conventional method.

The object compound (I) (in which $R^3$ is substituted or unsubstituted piperazinyl) in a free form can optionally be converted to its salt, and the intramolecular salt form of the object compound (I) (in which $R^3$ is an quaternary ammonium group) can also be converted reversely to its acid addition salt form by conventional manner. The starting compounds (II) and their salts are novel and can be prepared by the methods as shown in the Examples or the methods chemically equivalent thereto.

The following pharmacological data show that the object compound (I) exhibit high anti-tumor activity.

Test Method A

Groups of six female BALB/c mice, aged 12 weeks and weighing 19 - 21 g were used.

Fibrosarcoma Meth-A (hereinafter referred to as Meth-A) was successively transferred every 7 days into BALB/c mice by intraperitoneal inoculation of the ascites cells thereof and the Meth-A in the ascites cells as harvested 6 days after the inoculation was used as tumor cells.

Each of the BALB/c mice was inoculated intradermally with 1 x $10^5$ Meth-A cells in 0.05 ml Hanks solution.

Test compound was dissolved in 0.5% methylcellulose saline solution, and was intratumorally injected to each of the mice in doses of 100 µg/mouse once daily from Day 1 to Day 4 postimplant.

The control group was given with a vehicle alone in the same way.

The antitumor effectiveness of the test compound was estimated by tumor growth inhibition : (1-T/C)x100.

T : Mean diameter of the growing tumor of the medicated group on Day 21.

C : Mean diameter of the growing tumor of the control group on Day 21.

Body weight was checked on initial day and Day 4.

Test compound

The object compounds of Example 1-(4) and Example 4.

Results of Test Method A

| | | Compound (Example No.) | |
|---|---|---|---|
| | | 1 - (4) | 4 |
| Mean tumor size (mm) *a | | 0 | 0 |
| Tumor growth inhibition (%) *b | | 100 | 100 |
| Ratio of tumor free mice *c | | 6/6 | 6/6 |
| Body weight of mice (g) | Day 0 *d | 18.3 ± 1.11 | 19.5 ± 0.60 |
| | Day 4 *e | 19.1 ± 1.68 | 20.2 ± 1.11 |

*a : Mean of two diameters of the growing tumor
*b : Tumor growth inhibition (%) [(1-T/C)x100]
*c : Number of tumor free mice/Number of mice used as a group
*d : Mean body weight of mice on the time of implantation.
*e : Mean body weight of mice after 4 days of implantation.

Test Method B

Groups of eight female BALB/c mice, aged 8-9 weeks and weighing 18.0-22.5 g were used.

Fibrosarcoma Meth A (hereinafter referred to as Meth A) was successively transferred every 7 days into BALB/c mice by intraperitoneal inoculation of the ascites cells thereof and the Meth A in the ascites cells as harvested 6 or 7 days after the inoculation was used as tumor cells.

Each of the BALB/c mice was inoculated intrapleurally with 5 x $10^5$ Meth A cells in 0.1 ml Hanks solution.

Test compound was dissolved in phosphate buffer saline solution, and was injected into pleural cavity to each of the mice in doses of 100 μg/0.05 ml/mouse three times, i.e. before 14 days, after 1 hour and after 3 days of tumor implantation.

The control group was given with a vehicle alone in the same way.

The antitumor activity of the test compound was estimated by comparing mean survival time of the two groups.

T : Mean survival time of the medicated group
C : Mean survival time of the control group

Test Compound

The object compounds of Example 2-(4), Example 3-(4) and Example 4.

Results of Test Method B

| Compound Example No. | Mean survival time (Day) | Anti-tumor activity (%) *f |
|---|---|---|
| 2 - (4) | 7.0 | 117 |
| 3 - (4) | 37.5 | 536 |
| 4 | 16.5 | 236 |

*f : T/C x 100

As being apparent from the above test results, the object compound (I) of the present invention shows an antitumor activity without exerting a harmful influence upon a body weight, and the object compound (I) is useful as an antitumor activity.

The effective ingredient may usually be administered with a dose of 0.1 mg/kg to 500 mg/kg, 1 to 4 times a day in a preparations such as tablet, granule, powder, capsule, syrup, injection, suppository and the like. However, the above dosage may be increased or decreased according to the age, weight or conditions of the patient or the administering method.

The above mentioned pharmaceutical preparations can be prepared in a conventional manner by using conventional carriers and additives.

The present invention is illustrated by the following Examples in more detail.

Example 1

(1)

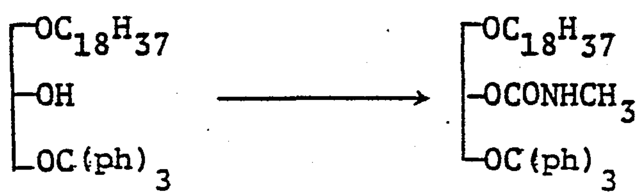

To a mixture of (rac)-1-O-octadecyl-3-O-trityl-glycerol (9.98 g) and dibutyltin dichloride (52 mg) in dry toluene (150 ml) was added methyl isocyanate (7.0 g) in one portion. The mixture was stirred for 3 hours at 50°C, and then evaporated under reduced pressure to yield 12.98 g of (rac)-1-O-octadecyl-2-O-methylcarbamoyl-3-O-trityl-glycerol as a crude oil, which was used to the next reaction step without further purification.

IR (film) : 3330, 3050, 2900, 2850, 1740 $cm^{-1}$

(2)

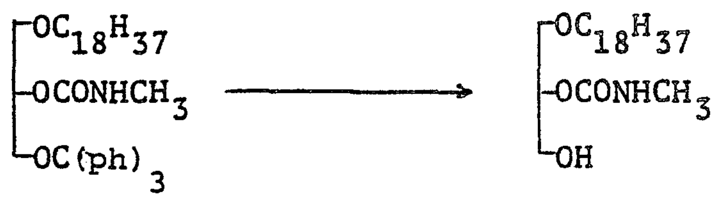

To a solution of thus obtained compound (15 g) in methylene chloride (100 ml) was added trifluoroacetic acid (15.7 ml) in one portion. After stirring for 8 minutes at ambient temperature, ice water (100 ml) was added thereto. The organic layer was washed with an aqueous sodium bicarbonate solution and water, dried, and evaporated under reduced pressure. The residue was treated with n-hexane (50 ml) and filtered. The filtrate was evaporated to give 8.44 g of (rac)-1-O-octadecyl-2-O-methylcarbamoyl-glycerol as a waxy solid.

IR (Nujol) : 3380, 1670 $cm^{-1}$

(3)

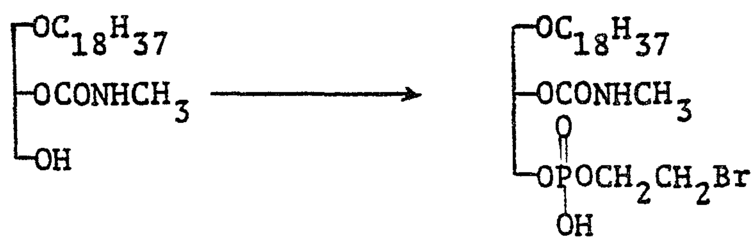

To a solution of 2-bromoethyldichlorophosphate (7.62 g) in dry chloroform (10 ml) was dropwise added, during a period over 30 minutes, a solution of the compound obtained above, Example 1-(2)(8.4 g) and triethylamine (3.18 g) in dry chloroform (10 ml). below 10°C. After stirring for 20 minutes at the same temperature and for an hour at ambient temperature, the mixture was cooled in an ice bath. To the resultant thick solution containing (rac)-1-O-octadecyl-2-O-methylcarbamoyl-glycerol-3-(2-bromoethyl)chlorophosphate was dropwise added a mixture of water (10.5 ml) and pyridine (21 ml) below 15°C. The resulting solution was allowed to warm to ambient temperature followed by stirring for 30 minutes. The solvent was then evaporated under reduced pressure. The residue was dissolved in a mixture of an aqueous sodium bicarbonate solution and diethyl ether. The aqueous layer was washed with diethyl ether, adjusted to pH 1 with 10% hydrochloric acid, and extracted twice with ethyl acetate. The extract was washed with water, dried, and evaporated under reduced pressure to yield 7.4 g of (rac)-1-O-octadecyl-2-O-methylcarbamoyl-glycerol-3-(2-bromoethyl)phosphate (waxy solid).

IR (Nujol) : 3300, 1700, 1560, 1210 $cm^{-1}$

(4)

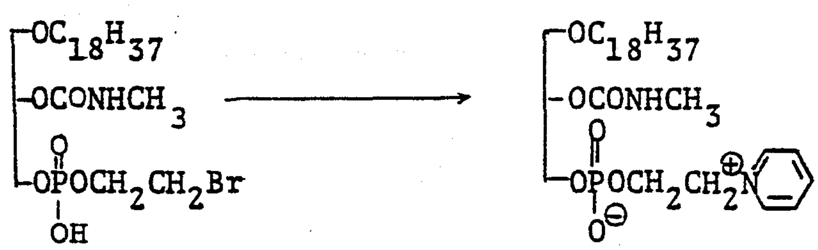

A mixture of the compound obtained above Example 1-(3) (2.94 g) and pyridine (9 ml) was stirred at 100°C for 1.5 hours, and evaporated to dryness. The residue was triturated in acetone. The powder was dissolved in a mixture of 90% aqueous methanol (26 ml) and chloroform (4 ml), and the mixture was treated with silver acetate (1.67 g) for an hour. The precipitates were removed by filtration and washed with methanol. The combined filtrate and washings were evaporated to dryness.

The residue was purified by column chromatography on silica gel (70 g, elution by chloroform-methanol-water,

65:25:4) to give 2.01 g of (rac)-1-O-octadecyl-2-O-methylcarbamoyl-glycerol-3-[2-(1-pyridinio)ethyl]-phosphate, which was recrystallized from a mixture of chloroform-acetone. yield 1.9 g. m.p. 195°C (dec.).

IR (Nujol) : 3350, 3250, 1710, 1640, 1235 $cm^{-1}$

NMR $(CD_3OD)_{ppm}$ : 0.90 (3H, m), 1.06-1.71 (32H, m), 2.71 (3H, s), 3.28-4.99 (11H, m), 8.05-9.13 (5H, m)

Anal.Calcd.for $C_{30}H_{55}N_2O_7P \cdot 1.75H_2O$

C:58.28, H:9.54, N:4.53

Found : C:58.28, H:9.75, N4.30

Example 2

(1)

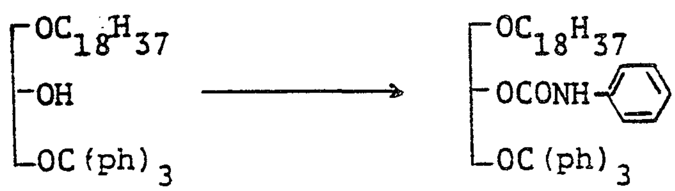

(rac)-1-O-Octadecyl-2-O-phenylcarbamoyl-3-O-trityl-glycerol (oil)(10.40 g) was obtained by reacting (rac)-1-O-octadecyl-3-O-trityl-glycerol (8.22 g) with phenyl isocyanate (1.83 g) in the presence of dibutyltin dichloride (42 mg) according to a similar manner to that of Example 1-(1).

IR (film) : 3300, 3050, 1735, 1700, 1600 $cm^{-1}$

(2)

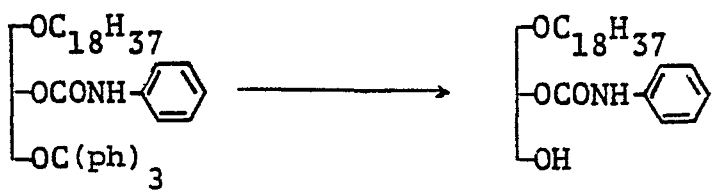

(rac)-1-O-Octadecyl-2-O-phenylcarbamoyl-glycerol (waxy solid)(4.2 g) was obtained by treating the object compound of Example 2-(1) (10.4g) with trifluoroacetic acid (10.4 ml) in a similar manner to that of Example 1-(2).

IR (Nujol) : 3400, 3250, 1710, 1620 $cm^{-1}$

(3)

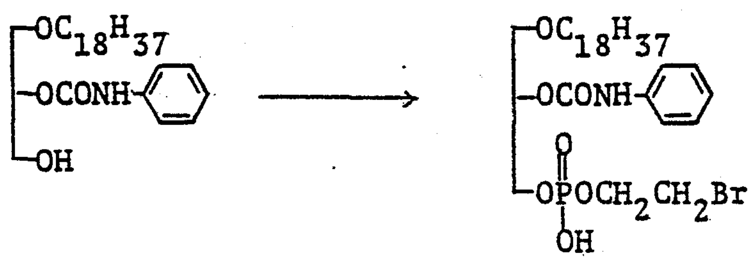

(rac)-1-O-Octadecyl-2-O-phenylcarbamoyl-glycerol-3-(2-bromoethyl)phosphate (waxy solid)(3.1 g) was obtained by reacting the object compound of Example 2-(2)(4.17 g) with 2-bromoethyldichlorophosphate (2.83 g) in a similar manner to that of Example 1-(3).

IR (Nujol) : 3300, 1695, 1600, 1245 $cm^{-1}$

(4)

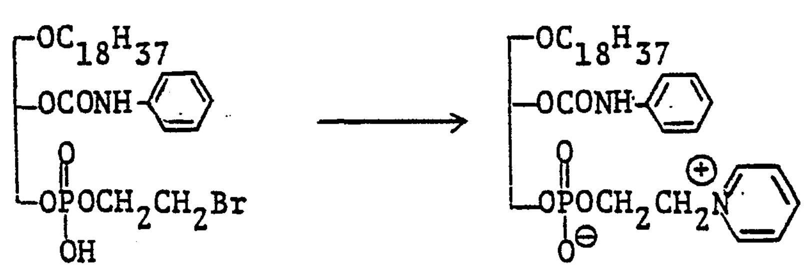

(rac)-1-O-Octadecyl-2-O-phenylcarbamoyl-glycerol-

3-[2-(1-pyridinio)ethyl]phosphate (1.72 g) was obtained by reacting the object compound of Example 2-(3)(2.87 g) with pyridine (8.6 ml) in a similar manner to that of Example 1-(4).

m.p. 195°C (dec.).

IR (Nujol) : 3300, 1725, 1600, 1220 $cm^{-1}$

NMR $(CD_3OD)_{ppm}$ : 0.90 (3H, m), 1.10-1.71 (32H, m), 3.38-5.00 (11H, m), 6.96-7.48 (5H, m), 7.91-8.98 (5H, m)

Anal.Calcd. for $C_{35}H_{57}N_2O_7P \cdot 3/2\ H_2O$

C: 62.20, H:8.95, N: 4.15

Found: C: 62.50, H:8.89, N: 3.77

Example 3

(1)

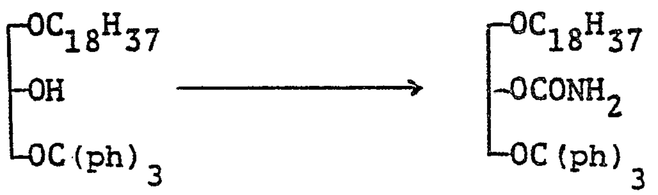

(rac)-1-O-Octadecyl-2-O-carbamoyl-3-O-trityl-glycerol (6.91 g) was obtained by reacting (rac)-1-O-octadecyl-3-O-trityl-glycerol (10.57 g) with trichloroacetyl isocyanate (4.29 g) in a similar manner to that of Example 1-(1).

m.p. 75°C.

IR (Nujol) : 3450, 3300, 1705, 1680, 1600 $cm^{-1}$

(2)

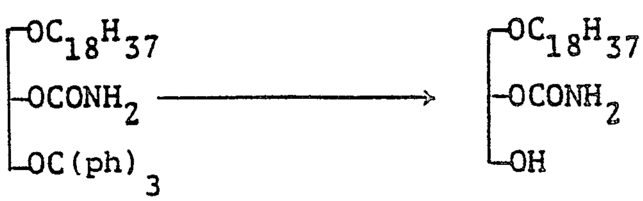

(rac)-1-O-Octadecyl-2-O-carbamoyl-glycerol (2.98 g)

was obtained by treating the object compound of Example 3-(1) (6.3 g) with trifluoroacetic acid (6 ml) in a similar manner to that of Example 1-(2). m.p. 77°C.

IR (Nujol) : 3420, 1675, 1620 $cm^{-1}$

(3)

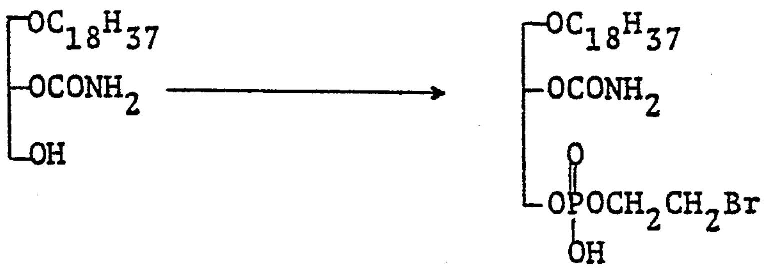

(rac)-1-O-Octadecyl-2-O-carbamoyl-glycerol-3-(2-bromoethyl)phosphate (1.97 g) was obtained by reacting the object compound of Example 3-(2) (2.71 g) with 2-bromoethyldichlorophosphate (2.54 g) in a similar manner to that of Example 1-(3).
m.p. 76°C.

IR (Nujol) : 3300, 3150, 1660, 1070, 1095 $cm^{-1}$

(4)

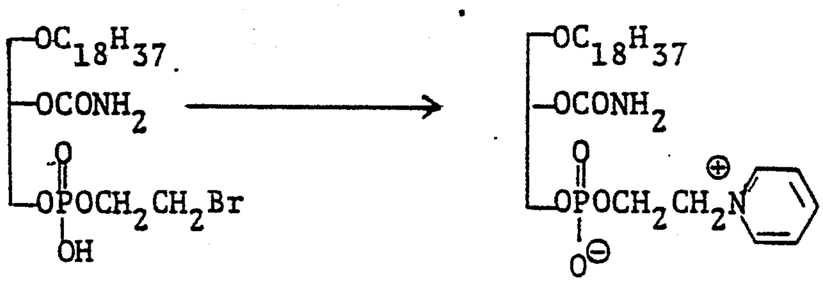

(rac)-1-O-Octadecyl-2-O-carbamoyl-glycerol-3-[2-(1-pyridinio)ethyl]phosphate (1.30 g) was obtained by treating the object compound of Example 3-(3)(1.95 g) with pyridine (9 ml).

m.p. 202°C (dec.).

IR (Nujol) : 3350, 3150, 1715, 1630, 1235 $cm^{-1}$

NMR $(CD_3OD)_{ppm}$ : 0.89 (3H, t, J=5Hz),

1.04-1.64 (32H, m),
3.36-4.94 (11H, m),
8.00-9.04 (5H, m)

Anal.Calcd. for $C_{29}H_{53}N_2O_7P \cdot H_2O$

C: 58.96, H: 9.38, N: 4.74

Found: C: 58.46, H: 9.61, N: 4.73

Example 4

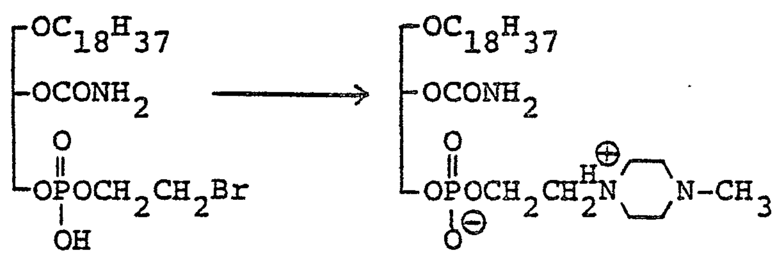

(rac)-1-O-Octadecyl-2-O-carbamoyl-glycerol-3-[2-(4-methyl-1-piperazinyl)ethyl]phosphate (2.36g) was obtained by reacting (rac)-1-O-Octadecyl-2-O-carbamoyl-glycerol-3-(2-bromoethyl)phosphate (3.50g) and N-methylpiperazine (12.2ml) in a similar manner to that of Example 1-(4).

m.p. 153°C (dec.).

IR (Nujol) : 3350, 1715, 1215, 1055 $cm^{-1}$

NMR $(CD_3OD)_{ppm}$ : 0.9 (3H,m), 1.04-1.8 (32H, m), 2.70 (3H, s), 2.8-3.2 (10H,m), 3.4-3.7 (4H, m), 3.9-4.2 (4H,m), 5.0 (1H,m)

Anal.Calcd. for $C_{29}H_{60}N_3O_7P \cdot 2H_2O$

C: 55.30, H: 10.24, N: 6.67

Found: C: 55.48, H: 9.91, N: 6.58

What is claimed is :

1. A compound of the formula :

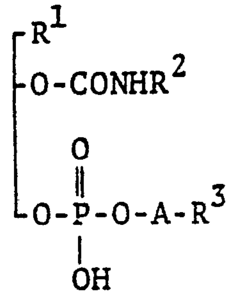

wherein $R^1$ is alkoxy;
$R^2$ is hydrogen, lower alkyl or aryl;
A is lower alkylene, and
$R^3$ is N-containing 6-membered heterocyclic group which is linked at N-atom and may be substituted by lower alkyl;
or a pharmaceutically acceptable salt thereof.

2. A compound according to claim 1, wherein $R^1$ is higher alkoxy.

3. A compound according to claim 2, wherein $R^3$ is unsaturated 6-membered heterocyclic group containing 1 to 2 nitrogen atom(s) which is linked at N-atom and may be substituted by lower alkyl.

4. A compound according to claim 3, wherein said heterocyclic group is pyridinio.

5. The compound according to claim 4, which is (rac)-1-O-octadecyl-2-O-carbamoyl-glycerol-3-[2-(1-pyridinio)ethyl]phosphate.

6. A compound according to claim 4, wherein $R^2$ is lower alkyl.

7. The compound according to claim 6, which is (rac)-1-O-octadecyl-2-O-methylcarbamoyl-glycerol-3-[2-(1-pyridinio)ethyl]phosphate.

8. A compound according to claim 4, wherein $R^2$ is aryl.

9. The compound according to claim 8, which is (rac)-1-O-octadecyl-2-O-phenylcarbamoyl-glycerol-3-[2-(1-pyridinio)ethyl]phosphate.

10. A compound according to claim 2, wherein $R^3$ is saturated 6-membered heterocyclic group containing 1 to 2 nitrogen atom(s) which is linked at N-atom and may be substituted by lower alkyl.

11. A compound according to claim 10, wherein said heterocyclic group is piperazinyl.

12. The compound according to claim 11, which is (rac)-1-O-octadecyl-2-O-carbamoyl-glycerol-3-[2-(4-methyl-1-piperazinyl)ethyl]phosphate.

13. A process for preparing a compound of the formula :

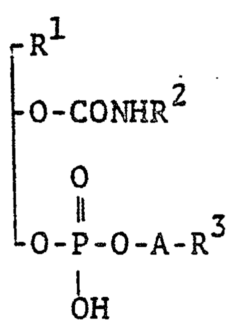

wherein $R^1$ is alkoxy;
$R^2$ is hydrogen, lower alkyl or aryl;
A is lower alkylene, and
$R^3$ is N-containing 6-membered heterocyclic

group which is linked at N-atom and may be substituted by lower alkyl;

or pharmaceutically acceptable salt thereof, which comprises by reacting a compound of the formula :

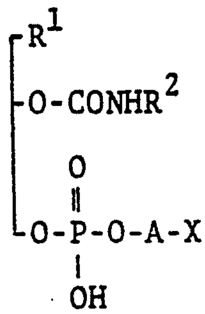

wherein $R^1$, $R^2$ and A are each as defined above;

and

X is an acid residue

or its salt with a N-containing 6-membered heterocyclic compound which may be substituted by lower alkyl or its salt.

14. A pharmaceutical composition, comprising an effective amount of a compound of claim 1, in association with a pharmaceutically acceptable, substantially notoxic carrier or excipient.

15. A method for treating cancer which comprises by administering an effective amount of a compound of claim 1 to human being.